# EUROPEAN PATENT SPECIFICATION

(11) **EP 4 599 581 B1**
(45) Date of publication and mention of the grant of the patent: **24.06.2026**
(21) Application number: 23798509.8
(22) Date of filing: 04.10.2023
(51) Int. Cl.: H04M 1/72409, H04M 1/18

(54) **MODULAR COVER FOR ELECTRONIC DEVICES**
MODULARES GEHÄUSE FÜR ELEKTRONISCHE GERÄTE
COUVERCLE MODULAIRE POUR APPAREILS ÉLECTRONIQUES

(30) Priority: 06.10.2022 IT 202200020619
(43) Date of publication of application: 13.08.2025
(73) Proprietor: Searcode S.r.l., 88100 Catanzaro (CZ) (IT)
(72) Inventor: MELE, Rizieri, 88100 Catanzaro (CZ) (IT)
(74) Representative: Giuliano, Natalia
(86) International application number: PCT/IB2023/059947
(87) International publication number: WO 2024/075026

(56) References cited:
- CN-U- 206 962 918
- US-B2- 9 654 605

## Description

The present invention relates to a modular cover for electronic devices.

In detail, the present invention relates to a modular cover for fixed or portable electronic devices, comprising interchangeable components able to customize aesthetic and functional characteristics of the aforementioned devices and, in particular, of smartphones and tablets.

The reference technical field, accordingly, is that of consumer electronics.

A protective element of the body of an electronic device, made in the form of a dedicated coating, in all respects plays the additional role of a means of individual expression and a follower of new trends.

Several covers, specifically designed for electronic devices, customized and with advanced functions, can are currently described in the patent literature.

A first example of a known technical solution is described by the text of the Italian patent 102019000004865, whose subject is an electronic cover for communication devices comprising a support body with an internal surface having a seat for housing a communication device and an external surface housing a microprocessor or microcontroller, equipped with a management program and a memory unit for storing digital contents. The cover comprises also a display, which covers at least partially the aforementioned external surface, suitable for reproducing digital contents. Furthermore, the microprocessor or microcontroller includes a bus connecting the display and is connected to a wireless connection module to interact with the electronic device through the management program.

A further known technical solution is described by the patent application US8825124B1, which cites a protective smart-case with multimedia capabilities through a capacitive touch screen display, a high-capacity neodymium speaker and a laser pointer integrated into the same smart-case. Such a case is designed to actively display images and videos saved to a memory of the same case, or in an external memory via a USB connection and/or to receive images from a smartphone, enclosed for example in the same smart-case.

Furthermore, the patent application US9654605B2 mentions an accessory with electrical parts for use with a portable electronic device, having a protective cover for the same portable electronic device. The accessory includes a body, a connector and electrical circuits. The body comprises a back part and a bottom part, with the former able to be slidingly attached to the back of the protective cover to removably attach the accessory to the back of the protective cover. The bottom is close to the bottom of the protective cover when the accessory is removably attached to the protective cover. The electrical connector is attached to the bottom of the accessory body and is positioned to electrically interconnect to a portable electronic device interface when the accessory is attached to the protective cover and the portable electronic device is positioned therein.

The patent application CN206962918U discloses a smart mobile phone metal protection for smartphones, including a main back panel, two upper sliding arms, two lower sliding arms, and four decorative corners. The two sides of the main back plate, respectively, have an inwardly concave left inner arc surface and a right inner arc surface corresponding to the left inner arc surface. The upper part is provided with a left inclined upper groove and a right inclined upper groove.

Finally, the patent application US2017205854A1 describes a system for displaying or projecting digital content selected by a user, comprising a cover of a mobile device, able to be removably applied on said mobile device, and a curvilinear display integrated in the cover and capable of displaying or projecting the aforementioned contents.

However, the known systems/covers for protecting electronic devices, having advanced functions of the type highlighted, suffer from some limitations, such as not combining universality, to be considered as adaptability to different models of devices, modularity and use of functions accessible via specific technological components.

The purpose of the present invention is to provide a modular cover for electronic devices that combines universality, modularity and advanced functionalities, having, therefore, characteristics such as to overcome the limits that still affect the known technical solutions.

According to the present invention, a modular cover for electronic devices is provided, as defined in the claim 1. Advantageous embodiments are set out in the dependent claims.

For a better understanding of the present invention, a preferred embodiment is now described, purely by way of nonlimiting example, with reference to the attached drawings, in which:
- figures 1a, 1b and 1c show, respectively, an overall perspective view and detail views of a first embodiment of a modular cover for electronic devices, according to the invention;
- figures 2a and 2b show, respectively, further overall and detail perspective views of the first embodiment of the modular cover for electronic devices, according to the invention;
- figures 3a and 3b show, respectively, a perspective view of a detail and an exploded view of a second embodiment of the modular cover for electronic devices, according to the invention;
- figure 4 shows further detail views of the second embodiment of the modular cover for electronic devices, according to the invention;
- figures 5a and 5b show, respectively, an overall perspective view and an exploded view of a third embodiment of the modular cover for electronic devices, according to the invention;
- figure 6, eventually, shows a perspective view of a detail of a fourth embodiment of the modular cover for electronic devices, according to the invention.

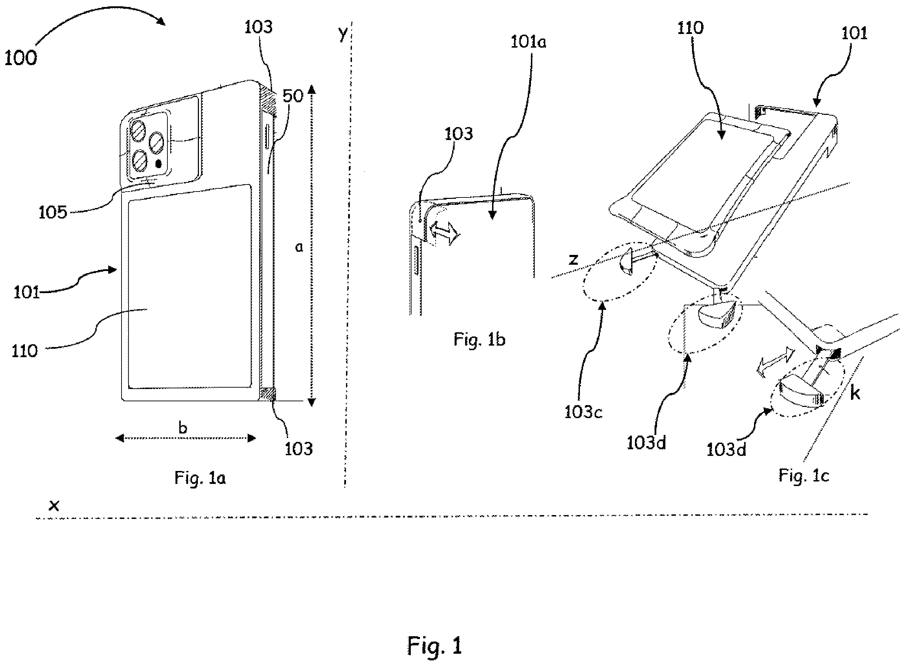

With reference to these figures and, in particular, to figure 1, a modular cover for electronic devices is shown, according to the invention.

In particular, the modular cover 100, 200, 300, 400 for electronic devices 50 comprises:
- a covering and protecting element 101, 201, 301, 401 having an external rear surface 101a, 201a, 301a, 401a removably housing an electronic device 50, for example a smartphone, a tablet, a notebook or the case of a desktop PC;
- a system for adjusting the dimensions of said covering and protecting element 101, 201, 301, 401, the latter referable also as a skeleton.

According to one aspect of the invention, the aforementioned system for adjusting the dimensions of the covering element 101, 201, 301, 401 comprises a plurality of sliding arms and a plurality of interchangeable peripheral edges.

According to another aspect of the invention, each interchangeable peripheral edge is removably connected to one end of a corresponding sliding arm.

According to one aspect of the invention, the modular cover 100, 200, 300, 400 comprises also at least one functional module.

According to one aspect of the invention, the at least one functional module comprises an electronic processing unit.

According to another aspect of the invention, the at least one functional module is removably mounted on the rear surface 101a, 201a, 301a, 401a of the covering and protecting element 101, 201, 301, 401.

According to one aspect of the invention, the covering and protecting element 101, 201, 301, 401 has a substantially parallelepiped shape, comprising a base 'b' and a height **'a',** as shown in the figures.

According to one aspect of the invention, the system for adjusting the dimensions of said covering and protecting element 101, 201, 301, 401 comprises a plurality of side elements 104, 204, 304, 404, each placed over a corresponding side portion of the covering and protecting element 101, 201, 301, 401.

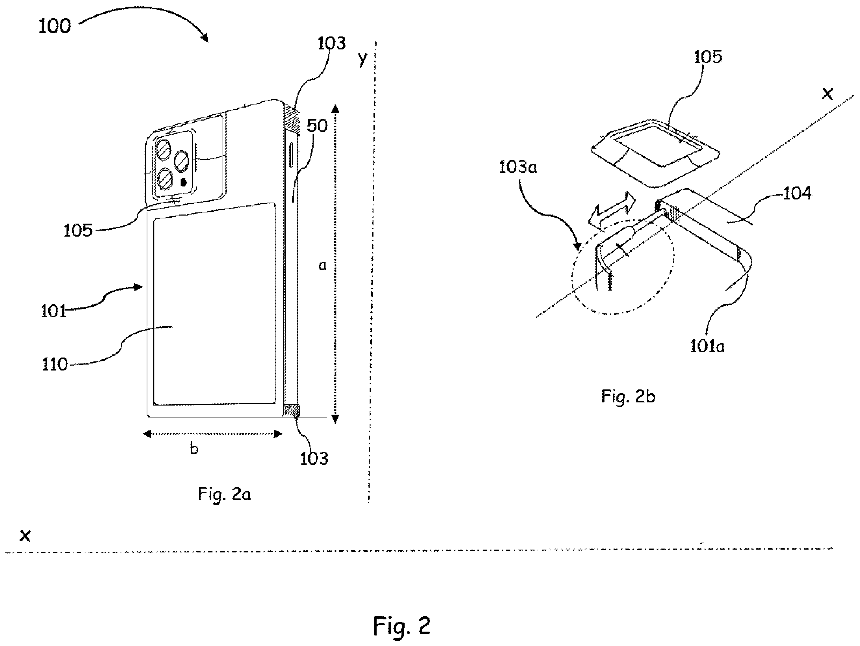

According to another aspect of the invention, according to three embodiments, shown respectively in figures 1-4 and 6, the system for adjusting the dimensions of the aforementioned covering and protecting element 101, 201, 401 comprises a plurality of corner elements 103, 203, 403.

According to one aspect of the invention, in such three embodiments each corner elements 103, 203, 403 is slidingly placed in correspondence with a corresponding corner portion of the covering and protecting element 101, 201, 401.

In particular, for the first embodiment, the plurality of corner elements 103 comprises a pair of corner elements 103a, 103b positioned in correspondence with respective ends of side elements 104, which are fixed, and slide along an axis 'x' parallel to the base 'b' of the aforementioned covering and protecting element 101.

Furthermore, in this first embodiment there a further pair of corner elements 103c, 103d is provided, slidingly placed, respectively along an axis 'z' and an axis 'k', both oblique with respect to said base 'b' and height 'a', as visible in figure 1c.

Furthermore, according to one aspect of the invention, in the second embodiment each of the side elements 204 is slidingly placed along an axis 'y' parallel to the height 'a'.

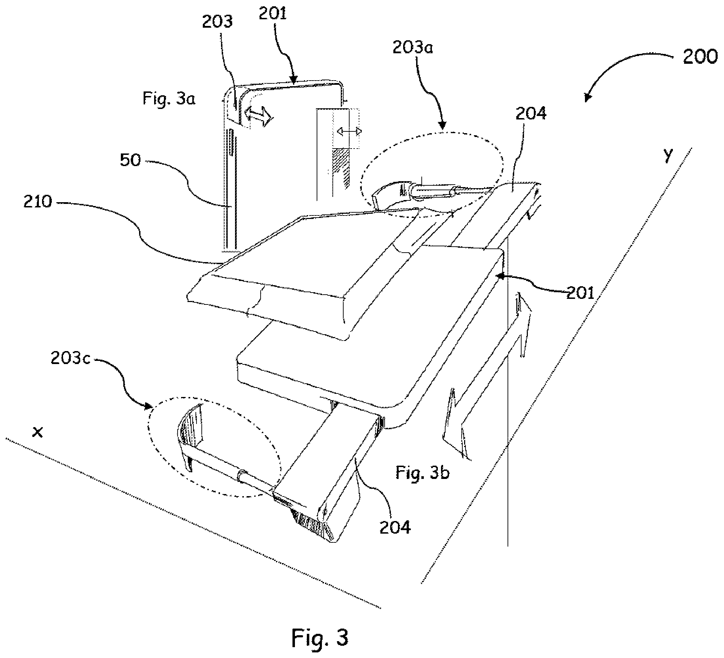

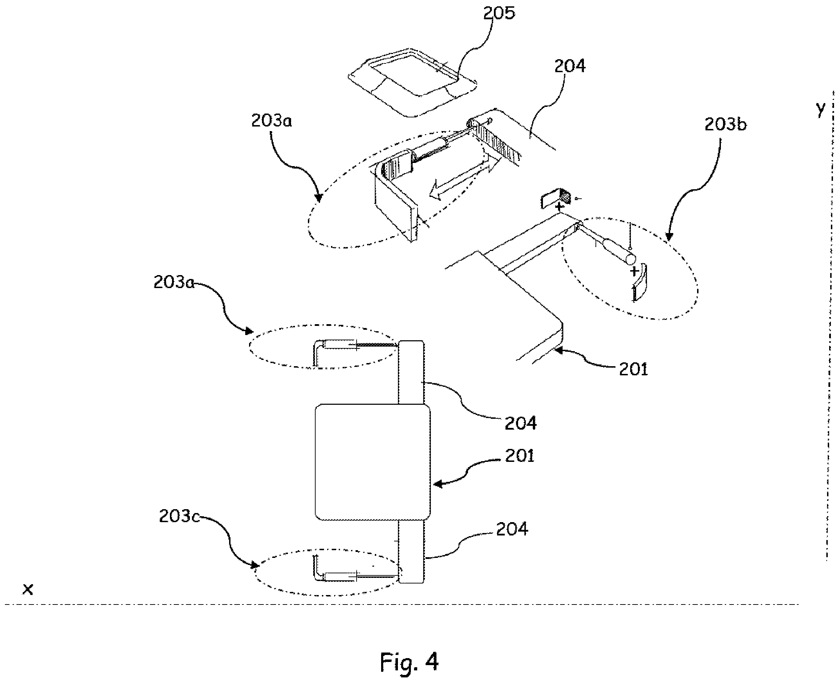

According to one aspect of the invention, in this second embodiment each of the corner elements 203 is placed in correspondence with a respective end of a corresponding side element 204, as well as able to slide along the 'x' axis, as shown in figures 3 and 4.

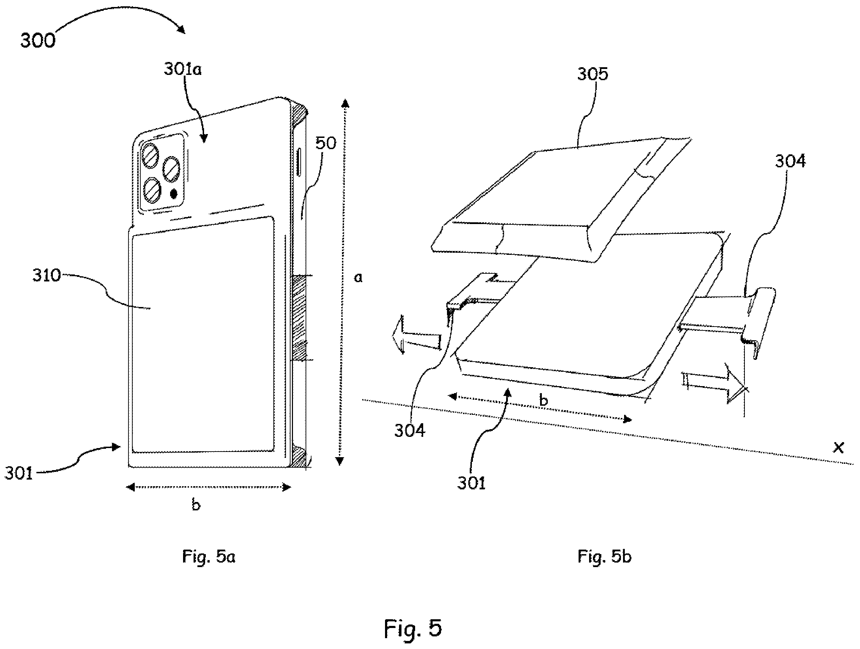

According to another aspect of the invention, in an alternative embodiment, i.e., a third implementation variant visible in figure 5, the modular cover 300, in a simplified version compared to the previous two described, includes only the side elements 304, orthogonal to those shown in the figures 1-4 for the two preferential 100 and 200 embodiments, able to slide, accordingly, along the 'x' axis.

According to one aspect of the invention, the external rear surface 101a, 201a, 301a, 401a is preferably flat.

According to another aspect of the invention, each of the corner elements 103, 203, 403 can also slide along an axis perpendicular to the external rear surface 101a, 201a, 401a.

According to one aspect of the invention, each of the side elements 104, 204, 304, 404 comprises a sliding arm and an interchangeable peripheral edge, the latter being removably connected to one end of the aforementioned sliding arm.

According to one aspect of the invention, each of the corner elements 103, 203, 403, referring respectively to the first, second and fourth embodiment, in turn includes a sliding arm and a related interchangeable peripheral edge removably connected to one end of the sliding arm.

In use, advantageously according to the invention, such a movement along an axis perpendicular to the external rear surface 101a, 201a, 401a of each of the corner elements 103, 203, 403 allows the depth of the covering end protecting element 101, 201, 401 to be adapted to the thickness of the specific electronic device 50, and is followed by the manual, telescopic adjustments of the corner and side elements, according to the different embodiments, which adapt the dimensions of the height 'a' and of the base 'b' of the same covering end protecting element 101, 201, 301, 401 to those of the electronic device 50.

According to one aspect of the invention, the covering end protecting element 101, 201, 301, 401 comprises, in correspondence with a front portion, opposite to the external rear surface 101a, 201a, 301a, 401a, an opening configured for a removable insertion of the electronic device 50 and to frame a display integrated into the electronic device 50.

According to one aspect of the invention, the at least one functional module consists of at least one subsystem comprised within the group consisting of:
- a display 110, 210, 310, 410;
- a power bank;
- a camera;
- a wireless speaker;
- a solid state data storage drive;
- an array of sensors;
- a compass;
- an altimeter.

According to one aspect of the invention, the covering and protecting element 101, 201, 301, 401 houses over its external rear surface 101a, 201a, 301a, 401a preferably several functional modules placed side by side, for example the display 110, 210, 310, 410 together with the power bank and the compass.

According to another aspect of the invention, several functional modules may be placed overlapped on each other.

According to one aspect of the invention, the at least one functional module, common to the four embodiments, is housed in its own container preferably made of plastic material.

According to one aspect of the invention, the at least one functional module comprises, as said, an electronic processing unit provided with at least one memory module and a control module saved to said memory module.

According to one aspect of the invention, for what concerns the at least one functional module implementing the display 110, 210, 310, 410, said display is connected to its electronic processing unit via a data transmission protocol compliant with the MIPI-DSI standard, a de facto standard for hardware and software interfaces in mobile devices, characterized by high energy efficiency, high quality in image and data transmission and high immunity to electromagnetic disturbances.

According to one aspect of the invention, the at least one functional module comprises electronic components and a rechargeable battery able to power said electronic components and the functional module itself.

According to one aspect of the invention, the control module comprised in the at least one functional module is implemented by means of a computer program product, managing the functional module itself, executed by the electronic processing unit.

According to one aspect of the invention, the functional module comprises, within the electronic components, a wireless data transmission module, preferably a Wi-Fi and/or Bluetooth LE microchip, connected to the electronic processing unit and configured for a data connection of the covering and protecting element 101, 201, 301, 401 with the electronic device 50 and/or with an external electronic device.

According to another aspect of the invention, the control module allows the electronic processing unit to manage also the operation of the wireless data transmission module, and the related wireless communications with the electronic device 50 and/or with an external electronic device, preferably to send static and dynamic images to the memory module, for example videos, to be reproduced by the display 110, 210, 310, 410.

In detail, according to the invention, such a control module is implemented, as said, by means of a computer program product executed by said electronic processing unit, which is preferably an MCU or an x86 or x64 CPU, in turn, as mentioned, equipped with at least one solid-state memory module, such as a flash memory module.

According to another aspect of the invention, the display 110, 210, 310, 410 is, preferably, an LCD/AMOLED display having approximate dimensions comprised between 3" and 5".

According to another aspect of the invention, the technical functions, implemented by the at least one functional module, may be alternatively managed by a further computer program product, i.e., an app, able to be downloaded from a dedicated store, installed on and executed by the electronic device 50.

According to another aspect of the invention, the technical functions, implemented by the at least one functional module, may be alternatively managed from the cloud.

According to another aspect of the invention, the at least one functional module is removably mounted on the external rear surface 101a, 201a, 301a, 401a of the covering and protecting element 101, 201, 301, 401 by means of an interlocking system.

According to one aspect of the invention, the modular cover 100, 200, 300, 400 comprises an interchangeable protective element 105, 205, 305, 405, or shell, able to be placed in correspondence with a portion of the external rear surface 101a, 201a, 301a, 401a of the covering and protecting element 101, 201, 301, 401, configured to frame a camera integrated in the electronic device 50.

According to another aspect of the invention, the interchangeable protective element 105, 205, 305, 405, able to protect the camera of the electronic device 50, also includes its own, further, interchangeable angular and side elements which adapt its profile, or curvature as far as concerns the concerning angular edges, to those of the camera of the electronic device 50.

According to another aspect of the invention, also the protecting and covering element 101, 201, 301, 401 may comprise, preferably placed in a dedicated internal housing, a further electronic processing unit, a memory module and a wireless data transmission module, as well as a further battery suitable for powering the aforementioned memory module, electronic processing unit and wireless data transmission module, the latter allowing the protecting and covering element 101, 201, 301, 401 to connect to the electronic device 50.

According to one aspect of the invention, the assembly comprising the covering and protecting element 101, 201, 301, 401, the display 110, 210, 310, 410, the corner elements 103, 203, 403, limited to such three embodiments, the side elements 104, 204, 304, 404 and the interchangeable protective element 105, 205, 305, 405 can be referred to as a universal, electronic and modular cover 100, 200, 300, 400, capable of personalizing the aesthetics, as well as protecting and expanding the functionalities, of the electronic device 50 enclosed in the modular cover itself.

According to another aspect of the invention, the covering and protecting element 101, 201, 301, 401, alias the skeleton, has, as mentioned, a substantially parallelepiped shape and is preferably made of a plastic material.

According to one aspect of the invention, a Non-Fungible Token, or NFT, is able to be applied to the skeleton 101, 201, 301, 401.

According to one aspect of the invention, the skeleton 101, 201, 301, 401 has a thickness comprised between 4 millimeters and 8 millimeters.

Advantageously according to the invention, the interlocking system used for mounting the at least one functional module to the covering and protecting element 101, 201, 301, 401 allows the technical specifications of the individual electronic device 50 to be customized and extended easily, according to a plug & play mode.

Advantageously according to the invention, the wireless data transmission module comprised in the functional module, according to the display 110, 210, 310, 410 implementation, allows static images, videos and other static multimedia elements to be sent to the covering element 101, 201, 301, 401 and to be reproduced through the same display 110, 210, 310, 410.

Advantageously according to the invention, the telescopic type of the sliding arms included in the corner elements 103, 203, 403 and in the side elements 204, 304, 404 allows the dimensions of the covering and protecting element 101, 201, 301, 401 to be adapted to those of different models of electronic devices 50, ensuring the universality of the personalized modular cover 100, 200, 300, 400 that frames a specific smartphone, notebook or tablet, extending its native functionality.

Likewise, advantageously according to the invention, the interchangeability of each peripheral edge removably connected to a corresponding end of a sliding arm allows the native curvature of the corner edges of the electronic devices 50 to be traced, simply by replacing the aforementioned peripheral edges.

Advantageously according to the invention, the provision of a battery to each functional module allows the autonomy and useful life of the battery integrated in the electronic device 50 to be preserved.

According to another aspect of the invention, both the functional module and the protecting and covering element 101, 201, 301, 401 comprise a rechargeable battery.

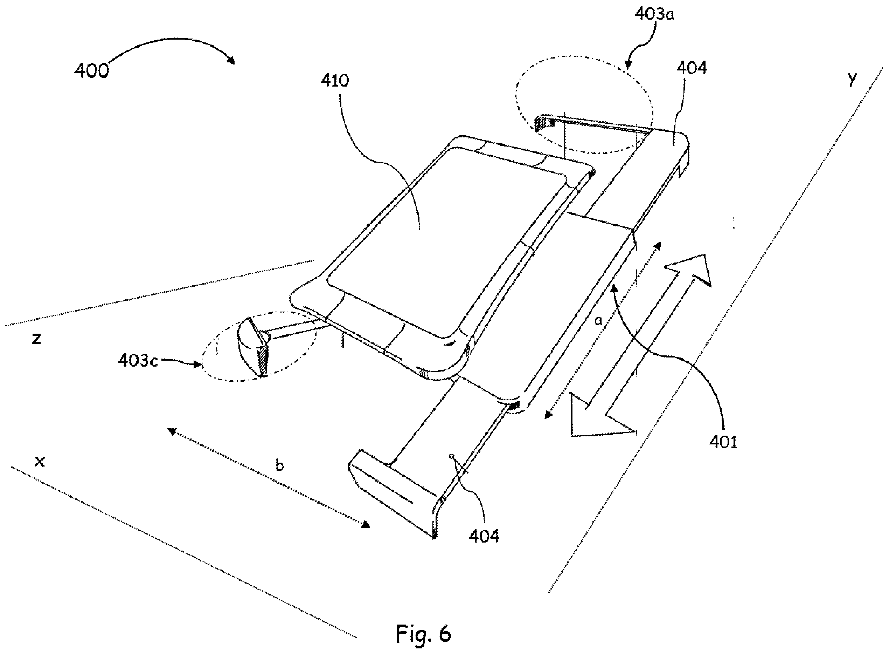

Furthermore, according to the fourth embodiment shown in figure 6, which in fact combines technical characteristics of the embodiments 100 and 200, the covering element 401 includes the side elements 404 that may slide and differs in that it includes a first corner element 403a and a second corner element 403c.

According to one aspect of the invention, in this fourth embodiment the first corner element 403a is placed in correspondence with one end of a corresponding side element 404 sliding along the axis 'y' and is able to slide along the axis 'x'.

According to one aspect of the invention, still regarding the embodiment 400, the second corner element 403c is placed slidingly along the axis 'z' which, as shown in figure 6, is oblique with respect to the base 'b' and the height 'a' of the covering and protecting element 401.

Therefore, the modular cover for electronic devices according to the invention allows to combine universality, modularity and advanced functionality, personalizing the aesthetics of the device to which it is applied thanks to static images and videos reproduced by a specific display, while protecting at the same time the structure of the device itself and extending the list of native technical characteristics thanks to one or more specific functional modules.

Another advantage of the modular cover for electronic devices according to the invention is that it is easy to use and requires low maintenance.

A further advantage of the modular cover for electronic devices according to the invention is that it is inexpensive.

Still, the modular cover for electronic devices according to the invention is easily scalable, both from a design and an industrial point of view thanks to its modular nature which allows the expansion and variation of its functionalities simply by changing functional blocks thanks to the interlocking system.

Finally, the modular cover for electronic devices according to the invention is characterized by a reduced complexity for what concerns a mass production.

It is finally clear that the modular cover for electronic devices, described and illustrated herein, may be subject to modifications and variations without departing from the protective scope of the present invention, as defined in the appended claims.

## Claims

1. Modular cover (100, 200, 300, 400) for electronic devices (50), comprising:
- a covering and protecting element (101, 201, 301, 401) having an external rear surface (101a, 201a, 301a, 401a), removably housing an electronic device (50);
- a system for adjusting the dimensions of said covering and protecting element (101, 201, 301, 401);
- at least one functional module, comprising an electronic processing unit, removably mounted on the external rear surface (101a, 201a, 301a, 401a) of the covering and protecting element (101, 201, 301, 401);
**characterized in that** the system for adjusting the dimensions of the covering and protecting element (101, 201, 301, 401) comprises:
- a plurality of sliding arms and a plurality of interchangeable peripheral edges, each interchangeable peripheral edge being removably connected to one end of a corresponding sliding arm;
- a plurality of side elements (104, 204, 304, 404), each placed over a corresponding side portion of the covering and protecting element (101, 201, 301, 401) and comprising a sliding arm and a corresponding interchangeable peripheral edge removably connected to one end of said sliding arm.

2. Modular cover (100, 200, 300, 400) according to claim 1, wherein said covering and protecting element (101, 201, 301, 401) has a substantially parallelepiped shape comprising a base 'b' and a height 'a'.

3. Modular cover (100, 200, 400) according to claim 1, wherein the system for adjusting the dimensions of said covering and protecting element (101, 201, 401) comprises a plurality of corner elements (103, 203, 403), each of said corner element (103, 203, 403) being slidingly placed in correspondence with a corresponding corner portion of the covering and protecting element (101, 201, 401), in that the external rear surface (101a, 201a, 401a) is flat, and in that each of the corner elements comprised in the plurality of corner elements (103, 203, 403) is able to slide along an axis perpendicular to said external rear surface (101a, 201a, 401a).

4. Modular cover (100) according to claims 2 and 3, wherein the plurality of corner elements (103) comprises a couple of corner elements (103a, 103b) slidingly placed, in correspondence with corresponding ends of side elements (104), along an axis 'x' parallel to the base 'b' of said covering and protecting element (101), and a couple of corner elements (103c, 103d) slidingly placed, respectively along an axis 'z' and an axis 'k' oblique to said base 'b' and height 'a'.

5. Modular cover (200) according to claims 2 and 3, wherein each of said side elements (204) is slidingly placed, along an axis 'y' parallel to said height 'a', and in that each of said corner elements (203) is placed in correspondence with a respective end of a corresponding side element (204), able to slide along the axis 'x'.

6. Modular cover (300) according to claim 4, wherein each of the side elements (304) is slidingly placed along the axis 'x'.

7. Modular cover (400) according to claim 4, wherein the plurality of corner elements (403) comprises a first corner element (403a) positioned in correspondence with an end of a corresponding side element (404) slidable along the axis 'y', said first corner element (403a) being slidable along the axis 'x', and a second corner element (403c) placed slidingly along the axis 'z' oblique with respect to said base 'b' and height 'a'.

8. Modular cover (100, 200, 400) according to claim 3, wherein each of the corner elements (103, 203, 403) comprises a sliding arm and a corresponding interchangeable peripheral edge removably connected to one end of said sliding arm.

9. Modular cover (100, 200, 300, 400) according to claim 1, wherein the covering and protecting element (101, 201, 301, 401) comprises, in correspondence with a front portion, opposite to the external rear surface (101a, 201a, 301a, 401a), an opening configured for a removable insertion of the electronic device (50) and to frame a display integrated in said electronic device (50).

10. Modular cover (100, 200, 300, 400) according to claim 1, wherein the at least one functional module consists of at least one subsystem comprised within the group consisting of:
- a display (110, 210, 310, 410);
- a battery;
- a camera;
- a wireless speaker;
- a solid state data storage drive;
- an array of sensors;
- a compass;
- an altimeter.

11. Modular cover (100, 200, 300, 400) according to claim 1, wherein the electronic processing unit, comprised in the at least one functional module, is provided with at least one memory module and a control module, saved to said at least one memory module, managing the at least one functional module and implemented by means of a computer program product executed by said electronic processing unit.

12. Modular cover (100, 200, 300, 400) according to claim 1, wherein said at least one functional module comprises a rechargeable battery able to power said at least one functional module.

13. Modular cover (100, 200, 300, 400) according to claim 1, wherein the at least one functional module is removably mounted on the external rear surface (101a, 201a, 301a, 401a) by means of an interlocking system.

14. Modular cover (100, 200, 300, 400) according to claim 1, wherein the at least one functional module comprises a wireless data transmission module, connected to the electronic processing unit, configured for the connection of said at least one functional module with the electronic device (50), said electronic device (50) being comprised within the group consisting of:
- smartphone;
- tablet;
- notebook;
- a case of a desktop PC.

15. Modular cover (100, 200, 300, 400) according to claim 1, wherein said modular cover (100, 200, 300, 400) comprises an interchangeable protective element (105, 205, 305, 405), placed in correspondence with one portion of the external rear surface (101a, 201a, 301a, 401a), configured to frame a camera integrated in the electronic device (50).

## Patentansprüche

1. Modulare Abdeckung (100, 200, 300, 400) für elektronische Vorrichtungen (50), umfassend:
- ein Abdeck- und Schutzelement (101, 201, 301, 401), das eine äußere Rückoberfläche (101a, 201a, 301a, 401a) aufweist, das eine elektronische Vorrichtung (50) abnehmbar aufnimmt;
- ein System zum Einstellen der Abmessungen des Abdeck- und Schutzelements (101, 201, 301, 401);
- mindestens ein Funktionsmodul, umfassend eine elektronische Verarbeitungseinheit, die abnehmbar auf der äußeren Rückoberfläche (101a, 201a, 301a, 401a) des Abdeck- und Schutzelements (101, 201, 301, 401) angebracht ist;
**dadurch gekennzeichnet, dass** das System zum Einstellen der Abmessungen des Abdeck- und Schutzelements (101, 201, 301, 401) Folgendes umfasst:
- eine Vielzahl von Gleitarmen und eine Vielzahl von austauschbaren Umfangskanten, wobei jede austauschbare Umfangskante abnehmbar mit einem Ende eines entsprechenden Gleitarms verbunden ist;
- eine Vielzahl von Seitenelementen (104, 204, 304, 404), wobei jedes über einem entsprechenden Seitenabschnitt des Abdeck- und Schutzelements (101, 201, 301, 401) platziert ist und einen Gleitarm und eine entsprechende austauschbare Umfangskante umfasst, die abnehmbar mit einem Ende des Gleitarms verbunden ist.

2. Modulare Abdeckung (100, 200, 300, 400) nach Anspruch 1, wobei das Abdeck- und Schutzelement (101, 201, 301, 401) eine im Wesentlichen parallelepipedische Form, umfassend eine Basis ,b' und eine Höhe ,a', aufweist.

3. Modulare Abdeckung (100, 200, 400) nach Anspruch 1, wobei das System zum Einstellen der Abmessungen des Abdeck- und Schutzelements (101, 201, 401) eine Vielzahl von Eckelementen (103, 203, 403) umfasst, wobei jedes der Eckelemente (103, 203, 403) gleitend in Entsprechung mit einem entsprechenden Eckabschnitt des Abdeck- und Schutzelements (101, 201, 401) platziert ist, so dass die äußere Rückoberfläche (101a, 201a, 401a) flach ist und so dass jedes der in der Vielzahl von Eckelementen (103, 203, 403) enthaltenen Eckelemente entlang einer Achse senkrecht zu der äußeren Rückoberfläche (101a, 201a, 401a) gleiten kann.

4. Modulare Abdeckung (100) nach den Ansprüchen 2 und 3, wobei die Vielzahl von Eckelementen (103) ein Paar von Eckelementen (103a, 103b), die in Entsprechung mit entsprechenden Enden von Seitenelementen (104) entlang einer Achse 'x' parallel zu der Basis 'b' des Abdeck- und Schutzelements (101) gleitend platziert sind, und ein Paar von Eckelementen (103c, 103d), die entlang einer Achse 'z' beziehungsweise einer Achse 'k' schräg zu der Basis ,b' und Höhe ,a' gleitend platziert sind, umfasst.

5. Modulare Abdeckung (200) nach den Ansprüchen 2 und 3, wobei jedes der Seitenelemente (204) entlang einer Achse 'y' parallel zu der Höhe 'a' gleitend platziert ist und so dass jedes der Eckelemente (203) in Entsprechung mit einem jeweiligen Ende eines entsprechenden Seitenelements (204), das entlang der Achse 'x' gleiten kann, platziert ist.

6. Modulare Abdeckung (300) nach Anspruch 4, wobei jedes der Seitenelemente (304) entlang der Achse 'x' gleitend platziert ist.

7. Modulare Abdeckung (400) nach Anspruch 4, wobei die Vielzahl von Eckelementen (403) ein erstes Eckelement (403a), das in Entsprechung mit einem Ende eines entsprechenden Seitenelements (404) entlang der Achse 'y' gleitend positioniert ist, wobei das erste Eckelement (403a) entlang der Achse 'x' gleitbar ist und ein zweites Eckelement (403c), das entlang der Achse 'z' schräg in Bezug auf die Basis ,b' und Höhe 'a' gleitend platziert ist, umfasst.

8. Modulare Abdeckung (100, 200, 400) nach Anspruch 3, wobei jedes der Eckelemente (103, 203, 403) einen Gleitarm und eine entsprechende austauschbare Umfangskante, die abnehmbar mit einem Ende des Gleitarms verbunden ist, umfasst.

9. Modulare Abdeckung (100, 200, 300, 400) nach Anspruch 1, wobei das Abdeck- und Schutzelement (101, 201, 301, 401) in Entsprechung mit einem vorderen Abschnitt gegenüber der äußeren Rückoberfläche (101a, 201a, 301a, 401a) eine Öffnung umfasst, die für eine abnehmbare Einfügung der elektronischen Vorrichtung (50) und zum Einrahmen einer in die elektronische Vorrichtung (50) integrierten Anzeige konfiguriert ist.

10. Modulare Abdeckung (100, 200, 300, 400) nach Anspruch 1, wobei das mindestens eine Funktionsmodul aus mindestens einem Teilsystem besteht, das innerhalb der Gruppe enthalten ist, die aus Folgendem besteht:
- einer Anzeige (110, 210, 310, 410);
- einer Batterie;
- einer Kamera;
- einem drahtlosen Lautsprecher;
- einem Festkörperdatenspeicherlaufwerk;
- einem Array von Sensoren;
- einem Kompass;
- einem Höhenmesser.

11. Modulare Abdeckung (100, 200, 300, 400) nach Anspruch 1, wobei die in dem mindestens einen Funktionsmodul enthaltene elektronische Verarbeitungseinheit mit mindestens einem Speichermodul und einem in dem mindestens einen Speichermodul gespeicherten Steuermodul bereitgestellt ist, das mindestens eine Funktionsmodul verwaltet und mittels eines durch die elektronische Verarbeitungseinheit ausgeführten Computerprogrammprodukts implementiert wird.

12. Modulare Abdeckung (100, 200, 300, 400) nach Anspruch 1, wobei das mindestens eine Funktionsmodul eine wiederaufladbare Batterie umfasst, die das mindestens eine Funktionsmodul mit Energie versorgen kann.

13. Modulare Abdeckung (100, 200, 300, 400) nach Anspruch 1, wobei das mindestens eine Funktionsmodul mittels eines Verriegelungssystems abnehmbar auf der äußeren Rückoberfläche (101a, 201a, 301a, 401a) angebracht ist.

14. Modulare Abdeckung (100, 200, 300, 400) nach Anspruch 1, wobei das mindestens eine Funktionsmodul ein mit der elektronischen Verarbeitungseinheit verbundenes drahtloses Datenübertragungsmodul umfasst, das für die Verbindung des mindestens einen Funktionsmoduls mit der elektronischen Vorrichtung (50) konfiguriert ist, wobei die elektronische Vorrichtung (50) innerhalb der Gruppe enthalten ist, die aus Folgendem besteht:
- Smartphone;
- Tablet;
- Notebook;
- einem Gehäuse eines Desktop-PCs.

15. Modulare Abdeckung (100, 200, 300, 400) nach Anspruch 1, wobei die modulare Abdeckung (100, 200, 300, 400) ein in Entsprechung mit einem Abschnitt der äußeren Rückoberfläche (101a, 201a, 301a, 401a) platziertes austauschbares Schutzelement (105, 205, 305, 405), das zum Einrahmen einer in die elektronische Vorrichtung (50) integrierten Anzeige konfiguriert ist, umfasst.

## Revendications

1. Couvercle modulaire (100, 200, 300, 400) pour appareils électroniques (50), comprenant :
- un élément de couverture et de protection (101, 201, 301, 401) ayant une surface arrière externe (101a, 201a, 301a, 401a), logeant de manière amovible un appareil électronique (50) ;
- un système permettant de régler les dimensions dudit élément de couverture et de protection (101, 201, 301, 401) ;
- au moins un module fonctionnel, comprenant une unité de traitement électronique, monté de manière amovible sur la surface arrière externe (101a, 201a, 301a, 401a) de l'élément de couverture et de protection (101, 201, 301, 401) ;
**caractérisé en ce que** le système de réglage des dimensions de l'élément de couverture et de protection (101, 201, 301, 401) comprend :
- une pluralité de bras coulissants et une pluralité de bords périphériques interchangeables, chaque bord périphérique interchangeable étant connecté de manière amovible à une extrémité d'un bras coulissant correspondant ;
- une pluralité d'éléments latéraux (104, 204, 304, 404), chacun étant placé sur une partie latérale correspondante de l'élément de couverture et de protection (101, 201, 301, 401) et comprenant un bras coulissant et un bord périphérique interchangeable correspondant connecté de manière amovible à une extrémité dudit bras coulissant.

2. Couvercle modulaire (100, 200, 300, 400) selon la revendication 1, dans lequel ledit élément de couverture et de protection (101, 201, 301, 401) a une forme sensiblement parallélépipédique comprenant une base « b » et une hauteur « a ».

3. Couvercle modulaire (100, 200, 400) selon la revendication 1, dans lequel le système de réglage des dimensions dudit élément de couverture et de protection (101, 201, 401) comprend une pluralité d'éléments d'angle (103, 203, 403), chacun dudit élément d'angle (103, 203, 403) étant placé de manière coulissante en correspondance avec une partie d'angle correspondante de l'élément de couverture et de protection (101, 201, 401), en ce que la surface arrière externe (101a, 201a, 401a) est plate, et en ce que chacun des éléments d'angle compris dans la pluralité d'éléments d'angle (103, 203, 403) peut coulisser le long d'un axe perpendiculaire à ladite surface arrière externe (101a, 201a, 401a).

4. Couvercle modulaire (100) selon les revendications 2 et 3, dans lequel la pluralité d'éléments d'angle (103) comprend un couple d'éléments d'angle (103a, 103b) placés de manière coulissante, en correspondance avec des extrémités correspondantes d'éléments latéraux (104), le long d'un axe « x » parallèle à la base « b » dudit élément de couverture et de protection (101), et un couple d'éléments d'angle (103c, 103d) placés de manière coulissante, respectivement le long d'un axe « z » et d'un axe « k » oblique à ladite base « b » et à la hauteur « a ».

5. Couvercle modulaire (200) selon les revendications 2 et 3, dans lequel chacun desdits éléments latéraux (204) est placé de manière coulissante, le long d'un axe « y » parallèle à ladite hauteur « a », et en ce que chacun desdits éléments d'angle (203) est placé en correspondance avec une extrémité respective d'un élément latéral correspondant (204), pouvant coulisser le long de l'axe « x ».

6. Couvercle modulaire (300) selon la revendication 4, dans lequel chacun des éléments latéraux (304) est placé de manière coulissante le long de l'axe « x ».

7. Couvercle modulaire (400) selon la revendication 4, dans lequel la pluralité d'éléments d'angle (403) comprend un premier élément d'angle (403a) positionné en correspondance avec une extrémité d'un élément latéral correspondant (404) pouvant coulisser le long de l'axe « y », ledit premier élément d'angle (403a) peut coulisser le long de l'axe « x », et un second élément d'angle (403c) placé de manière coulissante le long de l'axe « z » oblique par rapport à ladite base « b » et à ladite hauteur « a ».

8. Couvercle modulaire (100, 200, 400) selon la revendication 3, dans lequel chacun des éléments d'angle (103, 203, 403) comprend un bras coulissant et un bord périphérique interchangeable correspondant connecté de manière amovible à une extrémité dudit bras coulissant.

9. Couvercle modulaire (100, 200, 300, 400) selon la revendication 1, dans lequel l'élément de couverture et de protection (101, 201, 301, 401) comprend, en correspondance avec une partie avant, opposée à la surface arrière externe (101a, 201a, 301a, 401a), une ouverture configurée pour une insertion amovible du appareil électronique (50) et pour encadrer un affichage intégré dans ledit appareil électronique (50).

10. Couverture modulaire (100, 200, 300, 400) selon la revendication 1, dans lequel l'au moins un module fonctionnel est constitué d'au moins un sous-système compris dans le groupe constitué :
- d'un affichage (110, 210, 310, 410) ;
- d'une batterie ;
- d'une caméra ;
- d'une enceinte sans fil ;
- d'un disque de stockage de données à semi-conducteurs ;
- un ensemble de capteurs ;
- d'une boussole ;
- d'un altimètre.

11. Couvercle modulaire (100, 200, 300, 400) selon la revendication 1, dans lequel l'unité de traitement électronique, comprise dans l'au moins un module fonctionnel, est dotée d'au moins un module de mémoire et d'un module de commande, enregistré dans ledit au moins un module de mémoire, gérant l'au moins un module fonctionnel et mis en œuvre au moyen d'un produit de programme informatique exécuté par ladite unité de traitement électronique.

12. Couvercle modulaire (100, 200, 300, 400) selon la revendication 1, dans lequel ledit au moins un module fonctionnel comprend une batterie rechargeable capable d'alimenter ledit au moins un module fonctionnel.

13. Couvercle modulaire (100, 200, 300, 400) selon la revendication 1, dans lequel l'au moins un module fonctionnel est monté de manière amovible sur la surface arrière externe (101a, 201a, 301a, 401a) au moyen d'un système d'interverrouillage.

14. Couvercle modulaire (100, 200, 300, 400) selon la revendication 1, dans lequel l'au moins un module fonctionnel comprend un module de transmission de données sans fil, connecté à l'unité de traitement électronique, configurée pour la connexion dudit au moins un module fonctionnel avec l'appareil électronique (50), ledit appareil électronique (50) étant compris dans le groupe constitué :
- d'un smartphone ;
- d'une tablette ;
- d'un carnet de notes ;
- d'un boîtier d'un ordinateur de bureau.

15. Couvercle modulaire (100, 200, 300, 400) selon la revendication 1, dans lequel ledit couvercle modulaire (100, 200, 300, 400) comprend un élément de protection interchangeable (105, 205, 305, 405), placé en correspondance avec une partie de la surface arrière externe (101a, 201a, 301a, 401a), configuré pour encadrer une caméra intégrée dans l'appareil électronique (50).
